# EUROPEAN PATENT SPECIFICATION

(11) **EP 2 684 810 B1**
(45) Date of publication and mention of the grant of the patent: **02.03.2016**
(21) Application number: 13175044.0
(22) Date of filing: 04.07.2013
(51) Int. Cl.: B65D 19/44, B65D 25/10, B65D 85/68, B32B 5/02, B32B 5/26

(54) **Framework, bag system and web material for storing and transporting piece goods in flexible knitted bags**
Rahmen, Taschensystem und Bahnmaterial zur Lagerung und zum Transport von Stückgut in flexiblen gestrickten Taschen
Ossature, système de sac et matériau en bande pour le stockage et le transport de marchandises dans des sacs à mailles souples

(30) Priority: 10.07.2012 BE 201200477
(43) Date of publication of application: 15.01.2014
(73) Proprietor: conTeyor International nv, 9820 Merelbeke (BE)
(72) Inventor: Van Neck, Petra, 9000 Gent (BE)
(74) Representative: Brantsandpatents bvba

(56) References cited:
- WO-A1-2004/076318
- US-A- 4 554 202
- US-A1- 2003 031 388
- US-A1- 2007 066 176
- US-A1- 2008 073 301

## Description

### TECHNICAL FIELD

The present invention concerns an improved framework provided with a pouch system for the temporary storage and transport of piece goods in flexible pouches of the pouch system, wherein the pouches are confectioned from a strip material, wherein the strip material comprises a knitted fabric.

### BACKGROUND

Piece goods are often stored and transported in pouches, which are suspended or provided in a framework via a pouch system. Such devices, such as for example U-shaped pouches or flexible compartment systems, have their typical field of application in the automotive industry for transportation of the most diverse parts of motor vehicles, in particular also body parts such as doors, door linings and suchlike. The purpose is that the piece goods can be quickly and easily packaged and removed from the device. These pouches can often be folded to save space in an unloaded state and thus save transportation costs. They are confectioned from strip material, which should therefore be flexible.

For example, document US2008/073301A1 describes such a pouch system for installation in a transport container or framework.

There is a need for an improved framework wherein the strip material is softer, flexible, lighter, stronger, cheap enough and more durable than the known strip material for a pouch system in/on a framework for storing and transporting piece goods.

The present invention has an improved framework as an object for providing a solution to at least one of the above-mentioned disadvantages to the known storage and transport of piece goods in pouches, as defined in claim 1.

### SUMMARY OF THE INVENTION

The invention especially concerns a framework provided with a pouch system for temporarily storing and transporting piece goods in flexible pouches of the pouch system, in which the pouches are confectioned from a strip material, and wherein the strip material comprises a knitted material, as defined in claim 1.

In a second aspect the invention concerns a pouch system comprising one or more flexible pouches for the temporary storage and transport of piece goods, as defined in claim 12.

In a third aspect, the invention concerns strip material, suitable for being confectioned into a pouch system, as defined in claim 11.

In a fourth aspect, the invention concerns a method for the confectioning of a pouch system from a strip material, as defined in claim 13.

Further preferred embodiments are described in the sub-claims.

### DESCRIPTION OF THE FIGURES

The accompanying Figures 1-5 show preferred embodiments of the invention.
Figure 1 shows various views of a pouch system.
Figure 2 shows various views of a pouch system.
Figure 3 shows various views of a pouch system.
Figure 4 shows various views of a pouch system.
Figure 5 shows a cross-sectional view of strip material.
Figure 6 shows a schematic overview of the lamination process.
Figure 7 shows a partial view of a ribbing knitted fabric.
Figure 8 shows a partial view of a plain weave fabric.
Figure 9 shows a schematic overview of the the arrangement for the determination of the breaking strength, the seam strength and the tearing strength.
Figure 10 shows a representation for interpreting the strength, durability and protection of the strip material.

### DETAILED DESCRIPTION

"A", "the" and "it" refer in this document to both singular and plural, unless the context clearly implies otherwise. For example, a "pouch" means one or more than one pouch.

The terms "comprise", "comprising", "consist of", "consisting of", "provided with", "contain", "containing", "include", "including", "implies", 'implying" are synonyms and are inclusive or open terms that indicates the presence of that which follows and which do not exclude or preclude the presence or prevent other components, characteristics, elements, parts, steps, known or described in the prior art.

The term "framework" in the present invention refers to a set of one or more rigid elements suitable for suspension of a pouch system. Typical examples range from a rack, frame, box, and container to a tube or rod as a suspension device.

The terms "Velcro" or "barbed tape" are to be used synonymously in the present invention. The term "Velcro" in the present invention refers to a two-layer fastening or binding, which can be detached. It comprises on the one hand a piece of fabric with small hooks and on the other hand a piece of fabric covered with tiny loops.

Citing numerical intervals by endpoints comprises all integers, fractions and/or real numbers between the endpoints, these endpoints included.

When in this document "approximately" or "about/around" is used with a measurable quantity, a parameter, a duration or moment, and such like, then variations of +/-20% or less are to be understood as, preferably +/-10% or less, preferably more by +/-5% or less, even more preferably by +/-1% or less, and even more preferably +/-0.1% or less than and of the quoted value, in so far such variations are applicable to the invention as described. Here it should however be understood that the value of the quantity whereby the term "approximately" or "about/around" is used, is itself specifically indicated. Unless defined otherwise, all terms used in the description of the invention, also the technical and scientific terms, have as meaning such which meaning is generally comprehended by the skilled worker in the technical field of the invention.

In that which follows, the invention is described on the basis of non-limiting examples that illustrate the invention, and which are not intended or may be interpreted to limit the scope of the invention.

### DESCRIPTION OF THE FIGURES

The invention concerns a framework for the temporary storage and transport of piece goods.

Said framework is provided with a pouch system (10), comprising one or more flexible pouches (12) and which pouch system (10) is resting on or is mounted in or to the framework. These pouches (12) comprise an accommodation for the temporary storage of piece goods. The pouches (12) are confectioned from a strip material (1). Preferably, this strip material (1) comprises a knitted fabric. This has as an advantage that the pouches (12) are at the same time softer, flexible, lighter and sufficiently inexpensive. This also has the advantage that the strip material (1) will less likely to be damaged or torn by piece goods with sharp ends. This also has as an advantage that the strip material is dust-absorbent. In that way dust does not stay on the surface of the strip material (1), which reduces the risk of scratches or contamination on the loaded piece goods.

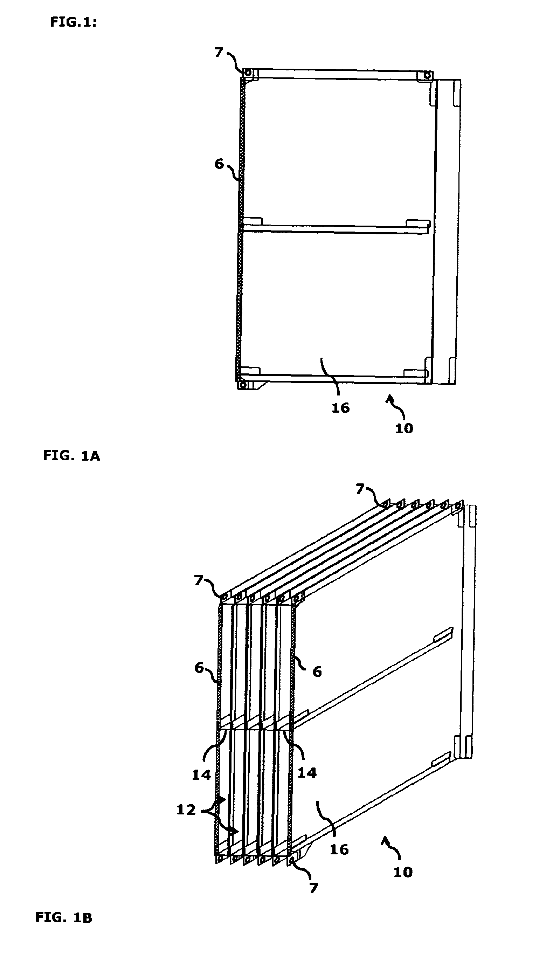

Figures 1-3 show various pouch systems (10) with their pouches (12), according to a preferred embodiment of the invention. Hereby the pouch system (10) comprises flexible strips (16), which can be tightened or can be suspended between frame elements (13) via suspension means, wherein intermediate pieces (14), which also comprise flexible strip material (1), are sewn to the stretchable or suspensible strips (16) via (double) seams (9) in such a way, that compartments are created. A frame element (13) is for instance a tube, a profile or a rod.

In Figure 1, a front view (Figure 1A) and a bird's eye view (Fig. 1B) of a pouch system (10) are shown, according to a more preferred embodiment of the invention. This pouch system (10) can be suspended via the ring openings (7) provided for this purpose, through which a rod (13) can be applied. The piece goods are to be loaded into the pouch system (10) on the side. The strips (16) and the framework are provided with Velcro strips (6), which are suitable to realize the Velcro-binding between the pouch system (10) and the framework.

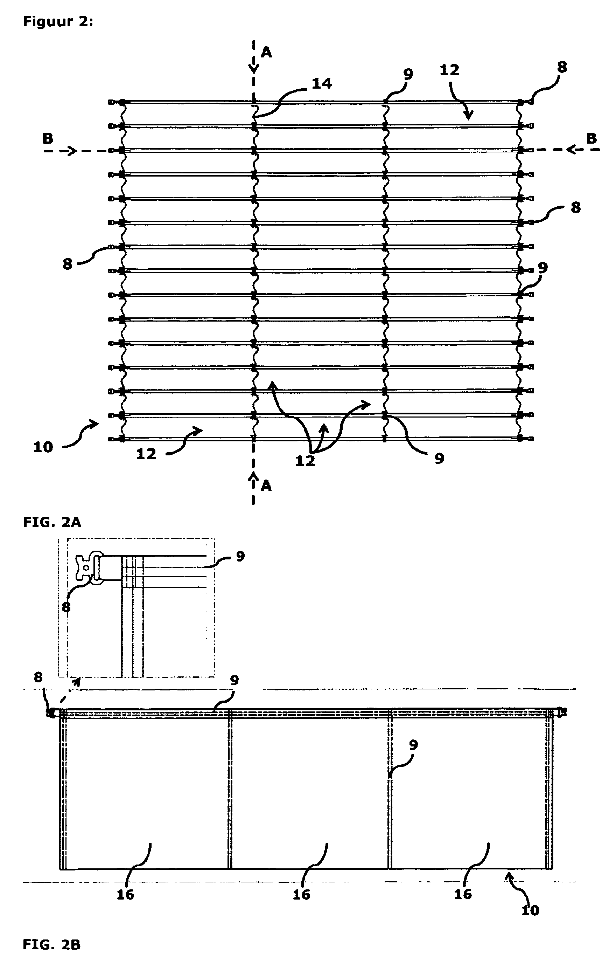

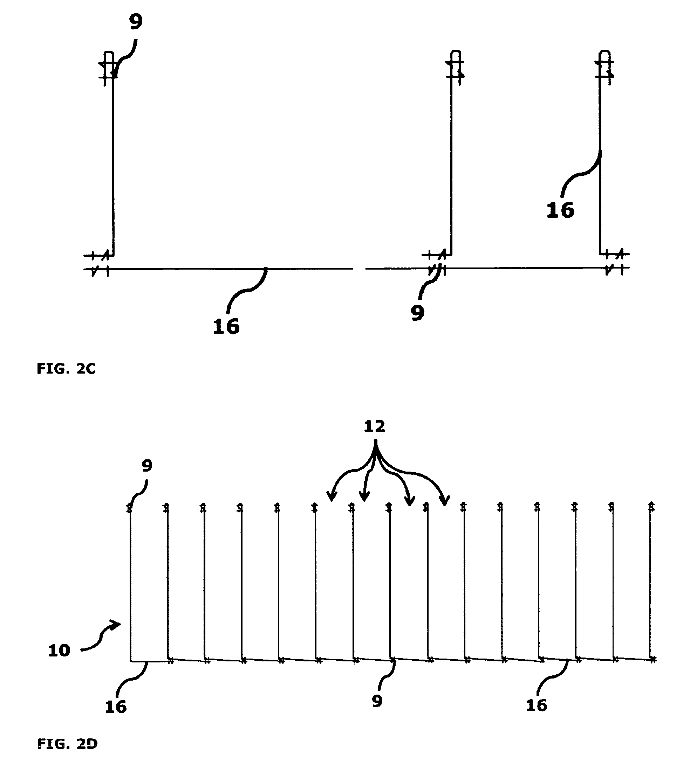

In Figure 2, a top view (Figure 2A), a front view (Figure 2B), and cross-sectional views (Figure 2C and 2D) of a pouch system (10) are shown, according to a more preferred embodiment of the invention. This pouch system (10) can be suspended via hooks (8) provided for this purpose, which may slide on and/or in a profile (13) of the framework. The piece goods are to be loaded from the top into the pouch system (10). The insert in Figure 2b shows a detailed view of a hook (8). Figure 2C shows the cross-sectional view according to B-B in Figure 2A. Figure 2D shows the cross-sectional view according to A-A in Figure 2A. The figures show how various strips (16) can be sewn by way of seams (9).

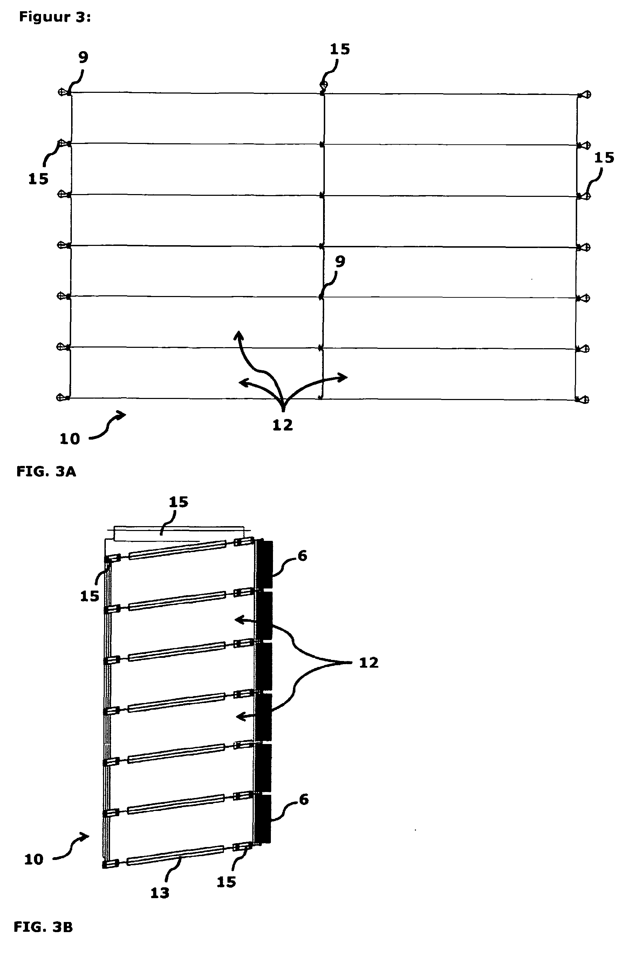

In Figure 3, a front view (Figure 3A) and a side view (Figure 3B) of a pouch system (10) are shown, according to a more preferred embodiment of the invention. This pouch system (10) can be suspended via the cylindrical loops (15) provided for this purpose, through which a rod (13) of the framework can be applied. The piece goods are to be loaded into the pouch system (10) at the front. The strips (16) and the framework are provided with Velcro strips (6), which are suitable to realize the Velcro binding between the pouch system (10) and the framework. The cylindrical loops (15) are thus provided that the formed pouches (12) obtain a downward gradient into the depth, according to an even more preferred embodiment of the invention. This has as an advantage that loaded piece goods less quickly shift or fall out of the pouch system (10).

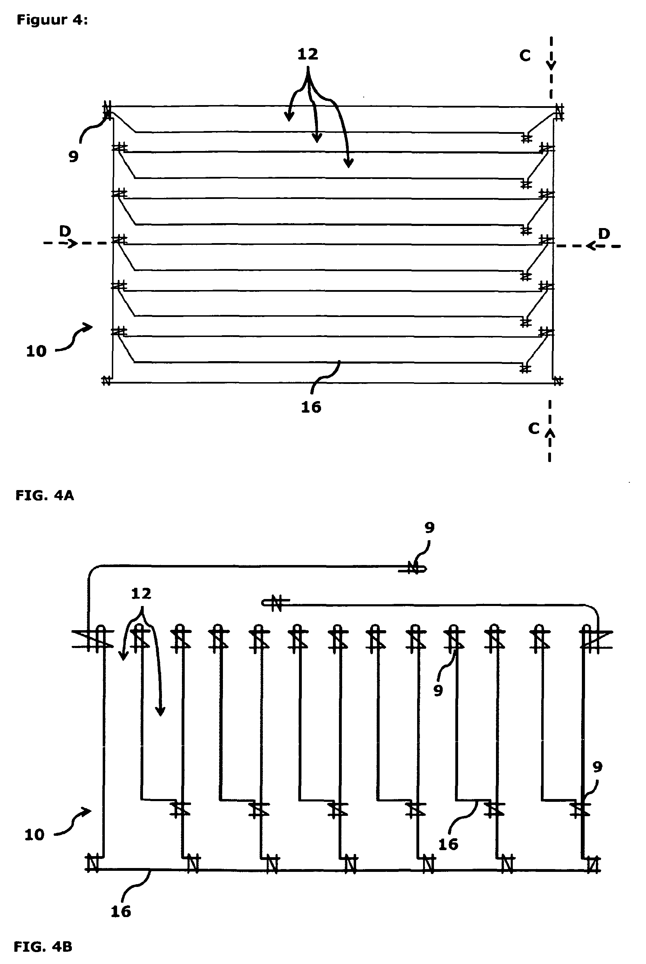

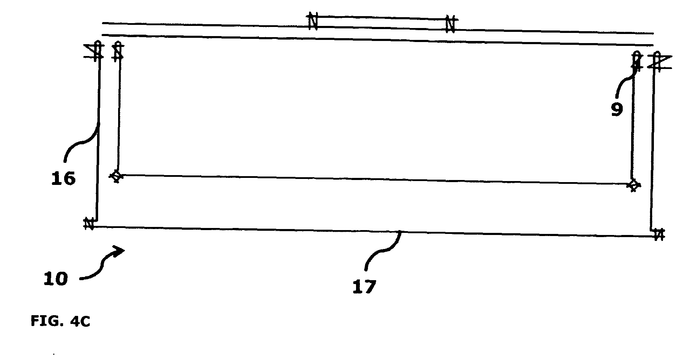

Figure 4 shows a top view (Figure 4A) and cross-sectional views (Figure 4B and 4C) of a pouch system (10), according to a preferred embodiment of the invention. This pouch system (10) consists at least of a bottom part (17) and a number of pouches (12), which can be taken up on the bottom part (17), wherein the pouches (12) entirely or at least in groups can be brought in a state where they are closely laid on top of one another, or in a folded state. The individual pouches (12) are substantially formed of U-shaped strip material (1). Here the pouch system (10) comprises flexible strips (16), wherein the intermediate pieces (14), also comprising flexible strip material (1), are sewn to the strips (16) via (double) seams (9) in such a way, that compartments are created. The pouch system (10) can rest with its bottom part (17) on/in a framework. The piece goods are to be loaded from the top into the pouch system (10). In a more preferred embodiment, the strips (16) and the framework are provided with Velcro strips (6), which are suitable to realize the Velcro binding between the pouch system (10) and the framework. Figure 4B shows the cross-sectional view according to C-C in Figure 4A. Figure 4C shows the cross-sectional view according to D-D in Figure 4A.

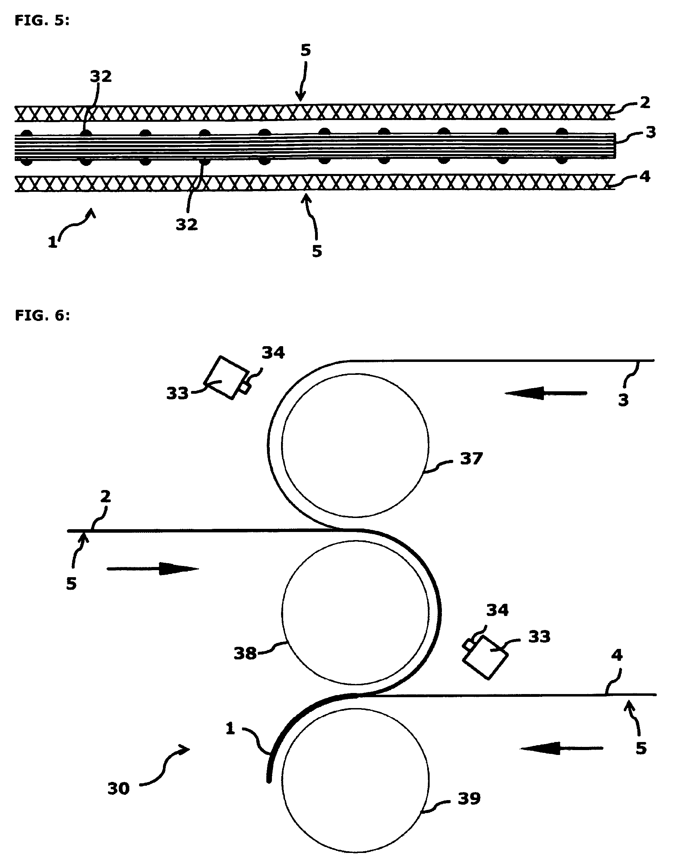

In Figure 5 a cross-sectional view of strip material (1) is shown, according to a preferred embodiment of the invention. The strip material (1) is multilayered.

This has as an advantage that the different layers of the strip material (1) can have other specific properties, so that the strip material (1) includes a combination of these properties.

The strip material (1) comprises three interconnected layers, i.e. an upper layer (2), a middle layer (3) and a lower layer (4). The strip material (1) comprises two free sides (5), wherein the upper layer (2) comprises a free side (5) and the lower layer (4) comprises a free side (5).

In Figure 6 a lamination process (30) is shown schematically, according to a more preferred embodiment of the invention. Three different bobbins are each provided with a winding of the upper layer (2), the middle layer (3) and the lower layer (4). The middle layer (3) revolves around an upper roll (37) and on to a middle roll (38), around which the upper layer (2) is revolving. A nozzle head (33) at the upper roll (37), which nozzle head (33) is provided with one or more nozzles (34), provides the middle layer (3) on one side periodically with glue (31) during the lamination process (30), before the middle layer (3) and the upper layer (2) are coupled to each other between the upper roll (37) and the middle roll (38). A nozzle head (33) at the middle roll (38), which nozzle head (33) is provided with one or more nozzles (34), provides the middle layer (3) on the free side periodically with glue (31) during the lamination process (30), before the combination of the middle layer (3) and upper layer (2) with the lower layer (4), which revolves around the lower roll (39), are coupled to each other between the upper roll (37) and the middle roll (38).

In a more preferred embodiment the glue (31) consists of polyurethane.

In a more preferred embodiment, the applied glue (31) forms glue spots (32). In an even more preferred embodiment, the number of glue spots per cm² is between 5 and 100, more preferably between 20 and 70, most preferably about 50.

This has as an advantage that the amount of glue per unit area of the strip material (1) remains limited. This is cheaper and the weight per unit area of the strip material remains limited.

In an even more preferred embodiment of the invention, the glue (31) is heated by a heating element.

In a more preferred embodiment of the invention, the strip material (1) is fixed after the lamination process (30). This prevents shrinkage of the strip material.

The upper layer (2) and the lower layer (3) comprise a flat knitted fabric.

In a preferred embodiment of the invention, the said knitted fabric is a polyester knit. This has as an advantage that the knitted fabric becomes more recyclable, heat-resistant, and less expensive. Polyester granules are melted in a spinning machine and formed into filaments. In a more preferred embodiment of the invention, the knitted fabric relates to a knitted fabric of polyethylene terephthalate (PET) yarns. In an even more preferred embodiment of the invention, the linear mass of the yarns is between 20 Td and 100 Td, more preferably between 40 Td and 60 Td, even more preferably about 50 Td. In an even more preferred embodiment, the number of fibres per yarn is preferably between 50 and 100, more preferably between 60 and 80 and most preferably 72.

In a preferred embodiment of the invention, the knitted fabric comprises polyester FDY fibres. The term "FDY fibres" in the present invention refers to "fully drawn yarn" fibres. This concerns continuous and long fibres. This has as an advantage that a stronger knitted fabric is obtained.

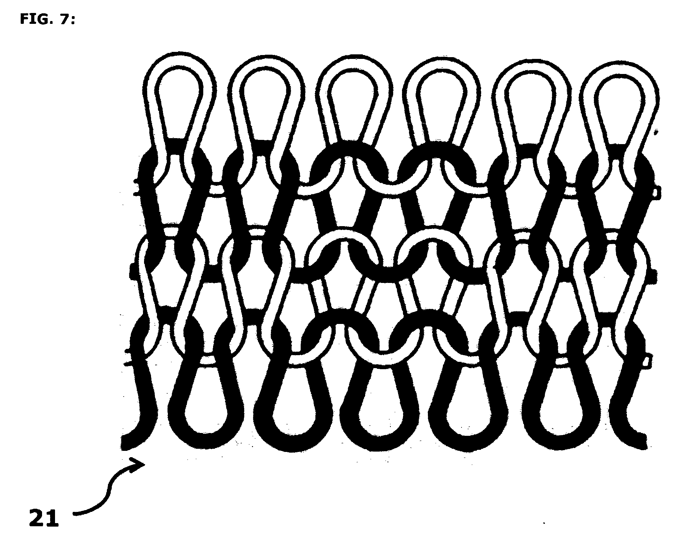

In Figure 7, a partial view of a knitted fabric is displayed, in accordance with a preferred embodiment of the invention. In a preferred embodiment of the invention, the knitted fabric concerns a ribbing knitted fabric (21). The term "ribbing knitted fabric" in this invention refers to a knitted fabric consisting of a number of alternating right and left stitches. The structure displays distinct vertical ribs. This has the advantage that the extensibility (in width) increases considerably. In a preferred embodiment of the invention, the ribbing knitted fabric (21) consists of an alternation of two right and two left stitches.

In a preferred embodiment of the invention, the free side (5) of the upper layer (2) and the free side (5) of the lower layer (4) are wooled up. The term "wooled up" in the present invention refers to the damaging of the fibres on the free side (5) of the upper layer by means of rolls, of which at least one roll is provided with needles. In this way these damaged fibres are provided with even smaller side fibres. This has as an advantage that the free sides (5) are softer, warmer and more absorbent and accordingly protect the piece goods against scratches and contamination.

In a preferred embodiment of the invention, the weight per unit area for the upper layer (2) and/or the lower layer (4) is between 90 g/m² and 120 g/m², preferably about 105 g/m².

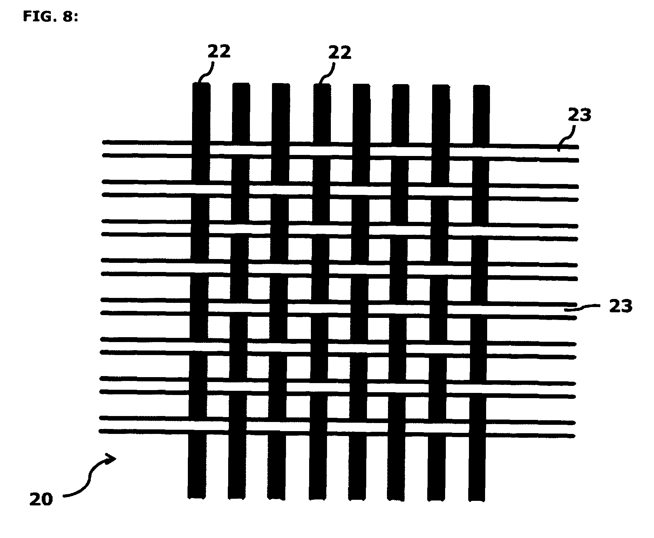

In a more preferred embodiment of the invention, the middle layer (3) comprises a fabric. In Figure 8 a partial view of a fabric is depicted, according to a preferred embodiment of the invention. In an even more preferred embodiment of the invention, the fabric is a plain weave fabric (20). The term "plain weave fabric" in the present invention refers to a fabric, obtained by the alternating raising of odd and even warp threads (23), wherein each warp thread (23) lies alternating over and under a weft thread (22). This has as an advantage that the strip material (1) becomes stronger.

In an even more preferred embodiment of the invention, the fabric is a polyester fabric (20). In a most preferred embodiment of the invention, the fabric is a fabric (20) of polyethylene terephthalate (PET) yarns.

This has the advantage that the tissue is recyclable. PET is very strong, chemically stable and a good thermoplastic. This also has as an advantage that the fabric becomes more hydrophobic. This reduces the risk of staining and contamination of the strip material (1) and thus enhances the durability of the strip material (1).

In a most preferred embodiment of the invention, the thickness of the weaving threads is preferably between 100Tex 300Tex, more preferably between 150Tex and 250Tex, most preferably about 190Tex.

In another even more preferred embodiment of the invention, the fabric is a cotton fabric (20).

In another even more preferred form of the invention, the fabric is a polyamide fabric (20).

In a more preferred embodiment of the invention, the weight per unit area for the middle layer (3) is between 60 g/m² and 80 g/m², preferably about 70 g/m².

In a preferred embodiment of the invention, the weight per unit area of the strip material (1) is between 220 g/m² and 340 g/m², preferably about 280 g/m².

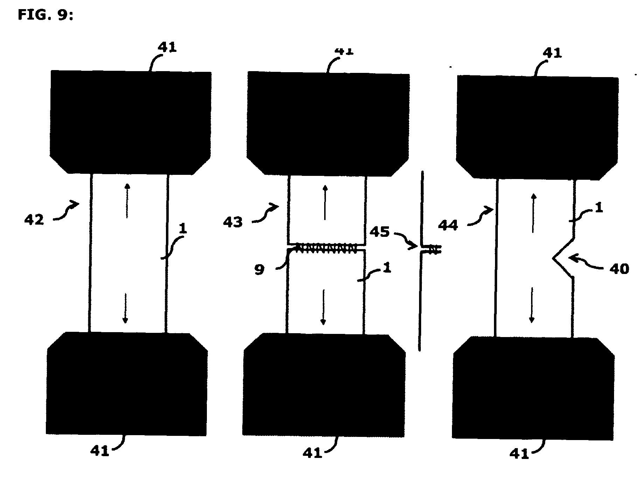

In Figure 9 a breaking strength arrangement (42), a seam strength arrangement (43), and a tearing strength arrangement (44) are schematically displayed.

The term "breaking strength" in the present invention refers to the force at which a 50mm wide strip of strip material (1) tears, wherein the strip is clipped via 2 clips (41) at opposite ends at a distance 200mm, and wherein said force is applied to the 2 clips (41) in the longitudinal direction of the strip and away from the strip. This corresponds to the ISO13934-test, which registers the break at maximum strength and maximum elongation.

The term "MD breaking strength" in the present invention refers to the breaking strength, wherein said strip corresponds in longitudinal direction to the machine direction of the fabric (cf. MD: "machine direction").

The term "CD breaking strength" in the present invention refers to the breaking strength, wherein said strip corresponds in longitudinal direction to the direction cross to the machine direction of the fabric (cf. CD: "cross direction").

The term "tearing strength" in the present invention refers to the breaking strength wherein a 75 mm wide strip is clipped at a distance of 25 mm and wherein the strip is provided with a trapezium-shaped notch (40). This corresponds to the ISO13937-test, which registers the force to tear the strip, which ISO13937-test is incorporated by reference.

The term "MD tearing strength" in the present invention refers to the tearing strength, wherein said strip corresponds in longitudinal direction to the machine direction of the tissue.

The term "CD tearing strength" in the present invention refers to the tearing strength, wherein said strip corresponds in longitudinal direction to the direction cross to the machine direction of the fabric.

The term "seam strength" in the present invention refers to the breaking strength, wherein two strips stitched to one another in a T-shape (45) are clipped on either side of the seam (9). This corresponds to the ISO13935-test, which registers the force to tear the seam or the stitched fabric.

The term "MD seam strength" in the present invention refers to the seam strength, wherein the said strip corresponds in the longitudinal direction to the machine direction of the fabric.

The term "CD seam strength" in the present invention refers to the seam strength, wherein said strip corresponds in longitudinal direction to the direction cross to the machine direction of the fabric.

In a preferred embodiment of the invention, the MD breaking strength of the strip material (1) is at least 800N, preferably at least 840N.

In a preferred embodiment of the invention, the CD breaking strength of the strip material (1) is at least 400 N, preferably at least 430N.

In a preferred embodiment of the invention, the MD tearing strength of the strip material (1) is at least 150N, preferably at least 175N.

In a preferred embodiment of the invention, the CD tearing strength of the strip material (1) is at least 100N, preferably at least 125N.

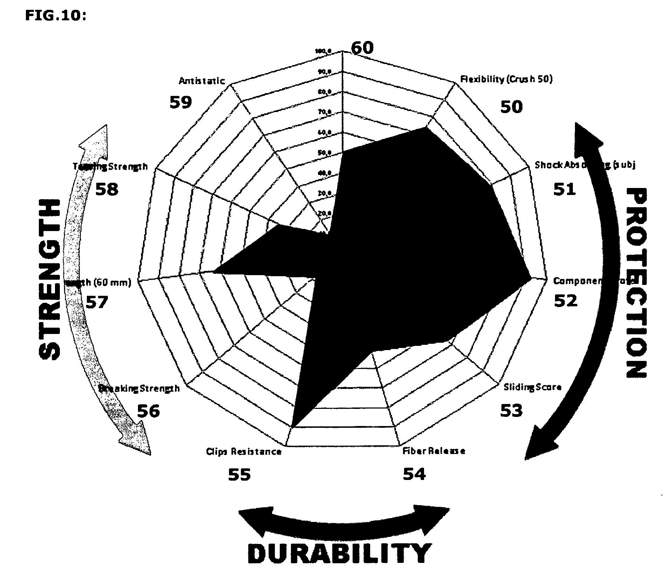

Figure 10 a representation for interpreting the strength, durability and protection of the strip material is displayed. This comprises the properties of flexibility (50), shock absorption (51), component protection (52), sliding score (53), fibre release (54), clipping resistance (55), breaking strength (56), seam strength (57), tearing strength (58), antistatic (59) and costs (60).

In another aspect, the invention concerns a pouch system (10) comprising one or more flexible pouches (12) for temporarily storing and transporting piece goods, wherein the pouches (12) are confectioned from a strip material (1), as described in the present document.

In another aspect, the invention concerns strip material (1), suited to be confectioned into a pouch system (10) as described in the present document.

In a preferred embodiment of the invention, the MD seam strength of the strip material (1) is at least 380N, preferably at least 420N.

In a preferred embodiment of the invention, the CD seam strength of the strip material (1) is at least 400N, preferably at least 480N.

In another aspect, the invention concerns a method for the confectioning of a pouch system (10) as described in the present document, from a strip material (1) as described in the present document.

It is assumed that the present invention is not limited to the embodiments described above and that several modifications or changes can be added to the examples described without having to re-evaluate the appended claims.

### REFERENCES IN THE FIGURES:

Strip material (1)
Upper layer (2)
Lower layer (4)
Free side (5)
Velcro strip (6)
Ring opening (7)
Hook (8)
Seam (9)
Pouch System (10)
Pouch (12)
Frame element (13)
Intermediate piece (14)
Cylindrical loop (15)
Strip (16)
Bottom part (17)
Plain weave fabric (20)
Ribbing knitted fabric (21)
Weft thread (22)
Warp thread (23)
Lamination process (30)
Glue (31)
Glue spot (32)
Nozzle head (33)
Nozzle (34)
Upper roll (37)
Middle roll (38)
Lower roll (39)
Notch (40)
Clip (41)
Breaking strength arrangement (42)
Seam strength arrangement (43)
Tearing strength arrangement (44)
T-shape (45)
Flexibility (50)
Shock absorption (51)
Component protection (52)
Sliding score (53)
Fibre release (54)
Clipping resistance (55)
Breaking Strength (56)
Seam Strength (57)
Tearing strength (58)
Antistatic (59)
Costs (60)

## Claims

1. Framework provided with a pouch system (10) for the temporary storage and transport of piece goods in flexible pouches (12) of a pouch system (10), wherein the pouches (12) are confectioned from a strip material (1), wherein the strip material (1) comprises a knitted fabric, wherein said strip material (1) is multi-layered, **characterized in that** said strip material (1) comprises three interlinked layers, which layers relate to an upper layer (2), a middle layer (3) and a lower layer (4) and that said upper layer (2) and said lower layer (3) comprise a flat knitted fabric.

2. Framework according to claim 1, **characterized in that** the knitted fabric concerns a polyester knitted fabric.

3. Framework according to claim 2, **characterized in that** the knitted fabric comprises polyester FDY fibres.

4. Framework according to any of the preceding claims 1-3, **characterized in that** the knitted fabric concerns a ribbing knitted fabric (21).

5. Framework according to any of the preceding claims 1-4, **characterized in that** the free side (5) of the upper layer (2) and the free side (5) of the lower layer (4) were wooled up.

6. Framework according to any of the preceding claims 1-5, **characterized in that** the middle layer (3) comprises a fabric.

7. Framework according to claim 6, **characterized in that** the fabric relates to a polyester fabric.

8. Framework according to any of the preceding claims 6-7, **characterized in that** the fabric relates to a plain weave fabric (20).

9. Framework according to any of the preceding claims 1-8, **characterized in that** the weight per unit area for the upper layer (2) and/or the lower layer (4) is between 90 g/m² and 120 g/m², preferably about 105 g/m².

10. Framework according to any of the preceding claims 1-9, **characterized in that** the weight per unit area for the middle layer (3) is between 60 g/m² and 80 g/m², preferably about 70 g/m².

11. Strip material (1) suitable to be confectioned into a pouch system (10) for a framework, said strip material (1) comprises a knitted fabric, and said material is multi-layered, **characterized in that** the material (1) comprises three interlinked layers, which layers relate to an upper layer (2), a middle layer (3) and a lower layer (4) and whereby the upper layer (2) and the lower layer (3) comprise a flat knitted fabric.

12. Pouch system (10) comprising one or more flexible pouches (12) for temporarily storing and transporting piece goods, wherein the pouches (12) are confectioned from a strip material (1), according to claim 11.

13. Method for the confectioning of a pouch system (10) according to claim 12 from a strip material (1) according to claim 11.

## Patentansprüche

1. Tragwerk mit einem Taschensystem (10) für das vorübergehende Aufbewahren und Transportieren von Stückgut in flexiblen Taschen (12) eines Taschensystems (10), wobei die Taschen (12) aus einem Streifenmaterial (1) konfektioniert sind, wobei das Streifenmaterial (1) ein gestricktes Gewebe umfasst, wobei das Streifenmaterial (1) mehrlagig ist, **dadurch gekennzeichnet, dass** das Streifenmaterial (1) drei verkettete Lagen umfasst, deren Lagen sich auf eine obere Lage (2), eine mittlere Lage (3) und eine untere Lage (4) beziehen und dass die obere Lage (2) und die untere Lage (3) ein flachgestricktes Gewebe umfassen.

2. Tragwerk nach Anspruch 1, **dadurch gekennzeichnet, dass** das gestrickte Gewebe ein gestricktes Polyestergewebe betrifft.

3. Tragwerk nach Anspruch 2, **dadurch gekennzeichnet, dass** das gestrickte Gewebe Polyesterfasern aus vollverstrecktem Garn umfasst.

4. Tragwerk nach einem der vorhergehenden Ansprüche 1-3, **dadurch gekennzeichnet, dass** das gestrickte Gewebe ein rippgestricktes Gewebe betrifft.

5. Tragwerk nach einem der vorhergehenden Ansprüche 1-4, **dadurch gekennzeichnet, dass** die freie Seite (5) der oberen Lage (2) und die freie Seite (5) der unteren Lage (4) einer "Pilling"-Aufbereitung unterzogen wurde.

6. Tragwerk nach einem der vorhergehenden Ansprüche 1-5, **dadurch gekennzeichnet, dass** die mittlere Lage (3) ein Gewebe umfasst.

7. Tragwerk nach Anspruch 6, **dadurch gekennzeichnet, dass** sich das Gewebe auf ein Polyestergewebe bezieht.

8. Tragwerk nach einem der vorhergehenden Ansprüche 6-7, **dadurch gekennzeichnet, dass** sich das Gewebe auf ein leinwandbindiges Gewebe bezieht.

9. Tragwerk nach einem der vorhergehenden Ansprüche 1-8, **dadurch gekennzeichnet, dass** das Flächengewicht für die obere Lage (2) und/oder die untere Lage (4) zwischen 90 g/m² und 120 g/m², vorzugsweise etwa 105 g/m², beträgt.

10. Tragwerk nach einem der vorhergehenden Ansprüche 1-9, **dadurch gekennzeichnet, dass** das Flächengewicht für die mittlere Lage zwischen 60 g/m² und 80 g/m², vorzugsweise etwa 70 g/m², beträgt.

11. Streifenmaterial (1), das geeignet ist, zu einem Taschensystem (10) für ein Tragwerk konfektioniert zu werden, wobei das Streifenmaterial (1) ein gestricktes Gewebe umfasst und das Material mehrlagig ist, **dadurch gekennzeichnet, dass** das Material (1) drei verkettete Lagen umfasst, deren Lagen sich auf eine obere Lage (2), eine mittlere Lage (3) und eine untere Lage beziehen und wobei die obere Lage (2) und die untere Lage (3) ein flachgestricktes Gewebe umfassen.

12. Taschensystem (10), das eine und mehrere flexible Taschen (12) umfasst, für das vorübergehende Aufbewahren und Transportieren von Stückgut, wobei die Taschen (12) aus einem Streifenmaterial (1) nach Anspruch 11 konfektioniert sind.

13. Verfahren für das Konfektionieren eines Taschensystems (10) nach Anspruch 2 aus einem Streifenmaterial (1) nach Anspruch 11.

## Revendications

1. Structure munie d'un système de poches (10) pour le stockage provisoire et le transport de marchandises à la pièce dans des poches souples (12) d'un système de poches (10), dans lequel les poches (12) sont confectionnées à partir d'une matière en bande (1), dans laquelle la matière en bande (1) comprend un tissu tricoté, dans laquelle ladite matière en bande (1) est à plusieurs couches, **caractérisée en ce que** ladite matière en bande (1) comprend trois couches liées, lesquelles couches se rapportent à une couche supérieure (2), une moyenne intermédiaire (3) et une couche inférieure (4) et **en ce que** ladite couche supérieure (2) et ladite couche inférieure (3) comprennent un tissu tricoté plat.

2. Structure selon la revendication 1, **caractérisée en ce que** le tissu tricoté concerne un tissu tricoté de polyester.

3. Structure selon la revendication 2, **caractérisée en ce que** le tissu tricoté comprend des fibres de polyester FDY.

4. Structure selon n'importe laquelle des revendications précédentes 1 à 3, **caractérisée en ce que** le tissu tricoté concerne un tissu tricoté à côtes (21).

5. Structure selon n'importe laquelle des revendications précédentes 1 à 4, **caractérisée en ce que** le côté libre (5) de la couche supérieure (2) et le côté libre (5) de la couche inférieure (4) étaient boulochés.

6. Structure selon n'importe laquelle des revendications précédentes 1 à 5, **caractérisée en ce que** la couche intermédiaire (3) comprend un tissu.

7. Structure selon la revendication 6, **caractérisée en ce que** le tissu se rapporte à un tissu de polyester.

8. Structure selon n'importe laquelle des revendications précédentes 6 et 7, **caractérisée en ce que** le tissu se rapporte à un tissu tissé uni (20).

9. Structure selon n'importe laquelle des revendications précédentes 1 à 8, **caractérisée en ce que** le poids par unité de surface pour la couche supérieure (2) et/ou la couche inférieure (4) est entre 90 g/m² et 120 g/m², de préférence environ 105 g/m².

10. Structure selon n'importe laquelle des revendications précédentes 1 à 9, **caractérisée en ce que** le poids par unité de surface pour la couche intermédiaire (3) est entre 60 g/m² et 80 g/m², de préférence environ 70 g/m².

11. Matière en bande (1) appropriée pour être confectionnée en un système de poches (10) pour une structure, ladite matière en bande (1) comprend un tissu tricoté, et ladite matière est à plusieurs couches, **caractérisée en ce que** la matière (1) comprend trois couches liées, lesquelles couches se rapportent à une couche supérieure (2), une couche intermédiaire (3) et une couche inférieure (4) et de sorte que la couche supérieure (2) et la couche inférieure (3) comprennent un tissu tricoté plat.

12. Système de poches (10) comprenant une ou plusieurs poches souples (12) pour provisoirement stocker et transporter des marchandises à la pièce, dans lequel les poches (12) sont confectionnées à partir d'une matière en bande (1), selon la revendication 11.

13. Procédé pour la confection d'un système de poches (10) selon la revendication 12 à partir d'une matière en bande (1) selon la revendication 11.
